# DEMANDE DE BREVET EUROPEEN

(11) **EP 1 588 618 A1**
(43) Date de publication de la demande: **26.10.2005**
(21) Numéro de dépôt: 05102983.3
(22) Date de dépôt: 15.04.2005
(51) Int. Cl.: A21B 1/04

(54) **Four de cuisson à feu de bois**

(30) Priorité: 21.04.2004 FR 0450750
(71) Demandeur: BISCROMA, Raymond, 06670 SAINT MARTIN DU VAR (FR)
(72) Inventeur: BISCROMA, Raymond, 06670 SAINT MARTIN DU VAR (FR)
(74) Mandataire: Decobert, Jean-Pascal

(57) **Abrégé**

La présente invention concerne un four du type composé d'un foyer fermé, d'une voûte (1), d'une façade ou autel (2) et d'un orifice (3) pour l'évacuation des fumées. Selon l'invention le four est tel que la voûte (1) est composée de deux parties, d'une partie arrière (4) et d'une partie avant (5) ; ces deux parties (4, 5) de la voûte (1) s'emboîtent au niveau de leur jonction par un encastrement avec un joint saillant (6) coopérant avec une rainure en creux (7) sur la partie avant (5) de la voûte (1) ; cette partie avant (5) de la voûte (1) s'encastre elle-même avec un joint saillant (8) avec la pièce faisant office de façade ou d'autel (2) ; entre cette façade ou autel (2) et la partie avant (5), il est prévu une réserve en partie haute qui forme l'orifice (3) de l'évacuation des fumées.

L'invention s'applique aux fours, notamment aux fours à pizza.

## Description

L'invention a pour objet un four de cuisson à feu de bois et son moule de fabrication.

L'invention s'applique notamment aux fours à pizza.

L'état de la technique peut être défini par les brevets suivants :
- *FR-A-2 748 384* : *l'invention concerne un four à pizza dans lequel le foyer placé dans l'enceinte voûtée du four, hors de la sole et en contre-bas, est en communication d'une part avec la chambre supérieure participant ainsi à l'échauffement de la surface supérieure de la sole, et d'autre part avec le ou les conduits aménagés au niveau de la surface inférieure de ladite sole ainsi parcourue aussi par les gaz de combustion qui atteignent la bouche de la cheminée située à l'extrémité du parcours des gaz de combustion à l'intérieur du ou desdits conduits. L'invention peut être utilisée pour assurer une production continue de pizza, le foyer n'étant plus entretenu de façon intermittente, et la température de cuisson étant maintenue constante sur toute la surface de la sole, les faces supérieure et inférieure de ladite sole étant simultanément soumises à l'échauffement du foyer.*
- *FR-A-2 380 497 : l'objet essentiel de la présente invention consiste dans le fait de placer un système de réglage facile à manier par le simple jeu d'une tirette et permettant de ce fait de contrôler tant les mouvements de fumée* *à l'intérieur d'un four que le réglage par simple jeu de ladite tirette de la puissance de chauffe et de l'approprier aux critères de cuisson* exigés, en *réalisant ainsi le meilleur rendement thermique du four.*
- *FR A-2 376 388 : four de cuisson à feu de bois caractérisé par le fait qu'il comporte :*
   - *d'une part un dôme constitué d'éléments préfabriqués en forme de trapèzes curvilignes s'assemblant les uns aux autres sur leurs côtés au moyen d'un tenon tel que coopérant avec une mortaise telle que de l'élément adjacent, ainsi qu'à une clé centrale,*
   - *d'autre part, un bloc d'entrée coulé* dans *une seule masse de béton réfractaire comprenant la bouche du four, une hotte extérieure d'évacuation des fumées, et une fente intérieure d'évacuation des* fumées, *lorsque le four est* fermé.

Le four selon l'invention est du type réalisé en plusieurs pièces coulées dans du béton réfractaire, composé d'un foyer fermé, d'une voûte, d'une façade ou autel et d'un orifice pour l'évacuation des fumées, ledit four est caractérisé par le fait que la voûte est composée de deux parties, une partie voûte avant et une partie voûte arrière, les deux parties s'emboîtant au niveau de leur jonction par un encastrement avec joint saillant, ledit joint saillant coopérant avec une rainure en creux disposée sur la partie voûte avant correspondante du four. La partie voûte avant de la voûte s'encastre elle-même avec un joint saillant avec une pièce faisant office de façade ou d'autel, entre les deux, une réserve en partie haute de la voûte forme l'orifice pour l'évacuation des fumées.

Selon un mode de réalisation préféré, la sole du four selon l'invention est réalisée en deux parties indépendantes coupées selon l'axe longitudinal du four.

Le joint saillant de la partie avant de la voûte du four forme deux jambes latérales surmontées d'un méplat prévu de chaque côté, d'un ergot de forme carrée qui est prévu jusqu'au sommet de la voûte.

L'invention a également pour objet un moule pour couler les pièces en béton réfractaire, ledit moule produit la forme de toutes les pièces composant le four, il est caractérisé par le fait que les arêtes sont incorporées au moule, il y a donc une seule pièce correspondante pour chaque élément moulé composant le four.

Les dessins ci-joints sont donnés à titre d'exemples et ne sont pas limitatifs de l'invention. Ils représentent seulement un mode de réalisation de l'invention et permettront de la comprendre aisément.

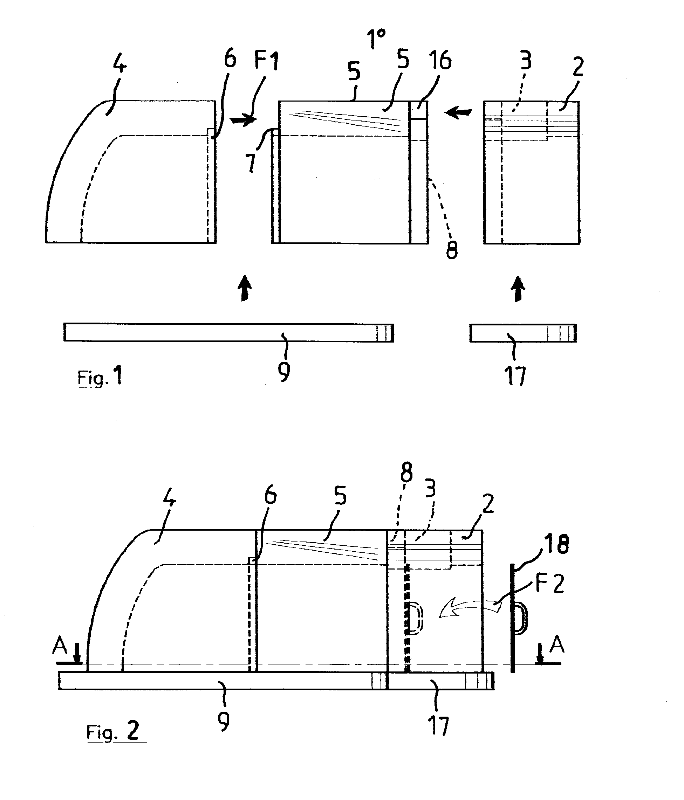

La figure 1 est une vue du four selon l'invention mettant en évidence la partie arrière de la voûte, la partie avant de la voûte et la partie faisant office de façade ou d'autel. On trouve également la sole et la dallette d'entrée.
La figure 2 est une vue schématique vue de côté du four selon l'invention où les différents éléments composant ledit four sont assemblés selon les flèches F1 représentées à la figure 1. De plus, cette vue, figure 2, met en évidence la porte du four 18 ainsi que sa mise en place par une flèche F2.

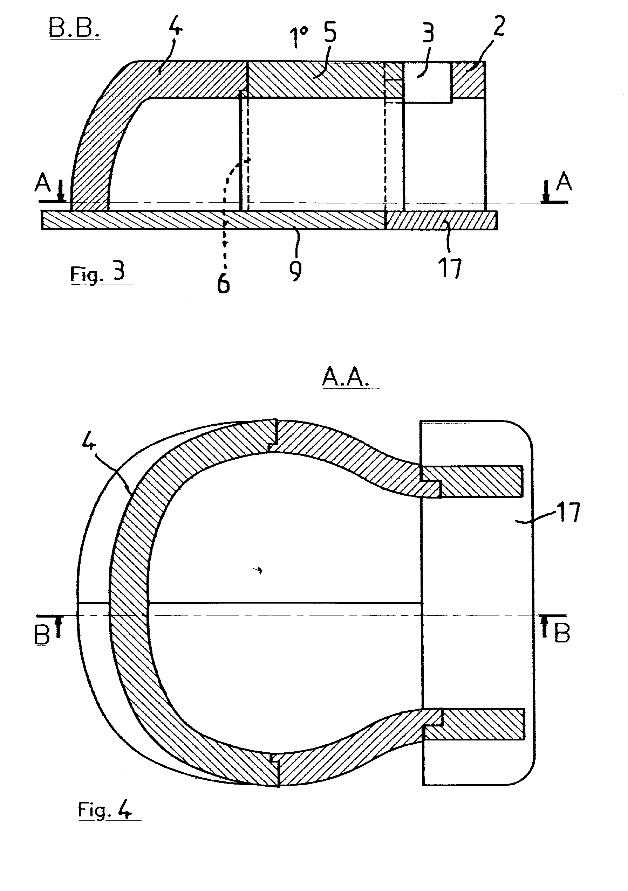

La figure 3 est une vue en coupe longitudinale du four selon l'invention vue selon l'axe de coupe BB représenté à la figure 4.
La figure 4 est une vue en coupe selon l'axe transversal AA représenté à la figure 3.

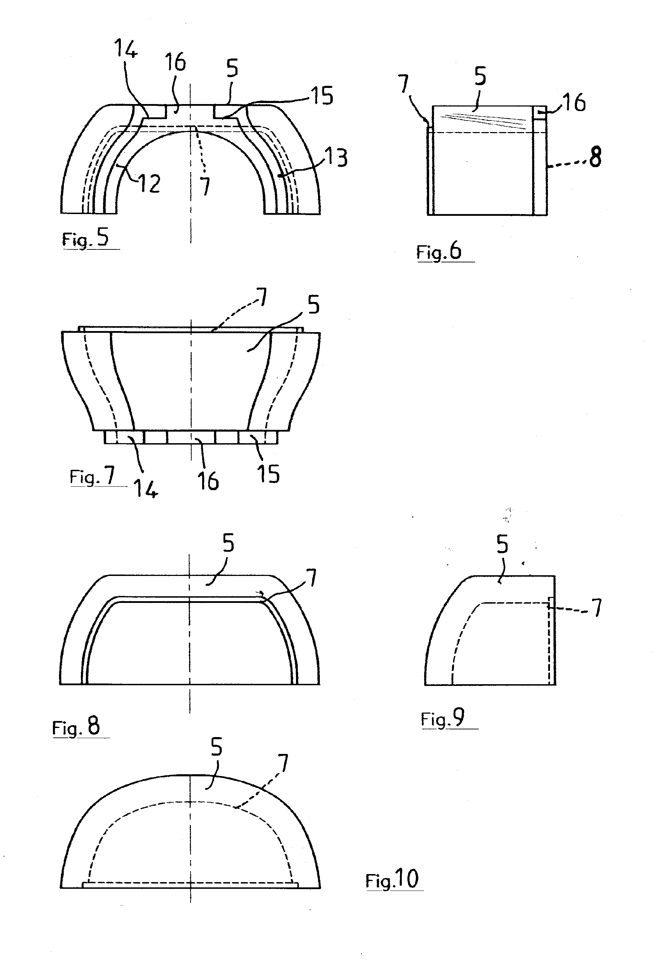

La figure 5 est une vue de face de la partie avant de la voûte.
La figure 6 est une vue de côté de la partie avant de la voûte.
La figure 7 est une vue de dessus de la partie avant de la voûte mettant en évidence les joints saillants.
La figure 8 est une vue de face de la partie arrière de la voûte.
La figure 9 est une vue de côté de la partie arrière de la voûte.
La figure 10 est une vue arrière de la partie arrière de la voûte.

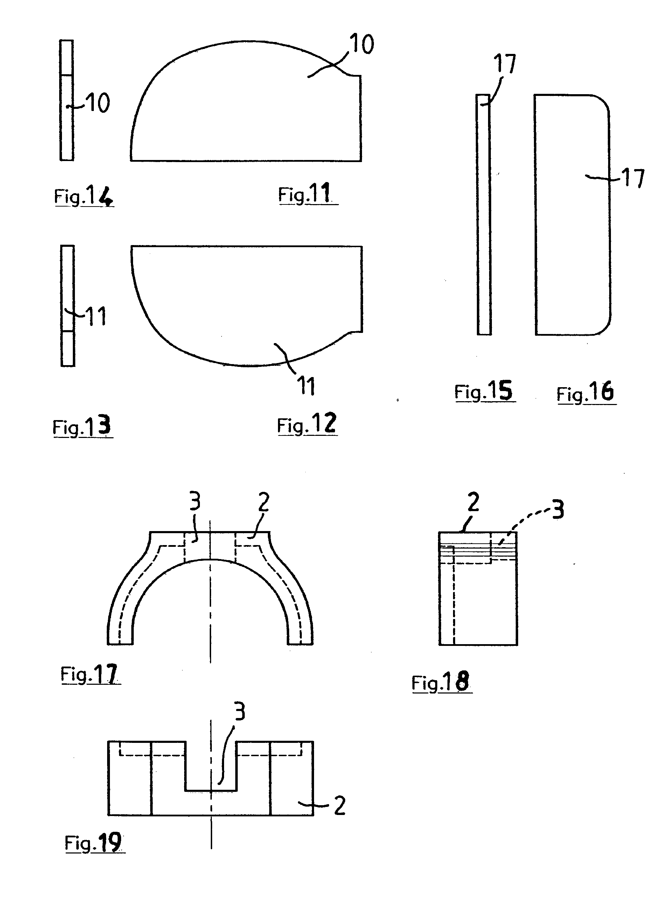

La figure 11 est une vue de dessus d'une partie droite de la sole.
La figure 12 est une vue de dessus de la partie gauche de la sole...
Les figures 13 et 14 sont des vues de côté des figures correspondant aux figures 11 et 12 de la partie droite et de la partie gauche de la sole.
La figure 15 est une vue de côté de la dallette selon l'invention.
La figure 16 est une vue de dessus de la dallette 17 selon l'invention.
La figure 17 est une vue de face de la façade ou autel.
La figure 18 est une vue de côté de la façade ou autel.
La figure 19 est une vue de dessus de la façade ou autel.

Le four selon l'invention a une meilleure résistance aux différences de température. L'assemblage des différentes parties avant, arrière et de la façade avec des joints saillants permet d'absorber aisément toutes les dilatations.

Le four selon l'invention est du type composé d'un foyer fermé, d'une voûte 1, d'une façade ou autel 2 et d'un orifice 3 pour l'évacuation des fumées. Le four est caractérisé par le fait que la voûte 1 est composée de deux parties, d'une partie arrière 4 et d'une partie avant 5. Ces deux parties 4, 5 de la voûte 1 s'emboîtent au niveau de leur jonction par un encastrement avec un joint saillant 6 coopérant avec une rainure en creux 7 sur la partie avant 5 de la voûte 1. Cette partie avant 5 de la voûte 1 s'encastre elle-même avec un joint saillant 8 avec la pièce faisant office de façade ou d'autel 2. Entre cette façade ou autel 2 et la partie avant 5, il est prévu une réserve en partie haute qui forme l'orifice 3 de l'évacuation des fumées.

La sole du four 9 est réalisée en deux parties indépendantes 10, 11 coupées selon l'axe longitudinal AA du four.

Le joint saillant 8 de la partie avant 5 du four forme deux jambes 12, 13 latérales surmontées de chaque côté d'un méplat 14, 15 de chaque côté d'un ergot 16 de forme carrée qui est prévu jusqu'au sommet de la voûte 1.

L'invention a également pour objet un moule pour couler les pièces en béton réfractaire, ledit moule produit la forme de toutes les pièces principales du four, à savoir la partie arrière 4, la partie avant 5 et la façade ou autel 2. Ledit moule produit la forme de toutes ces pièces composant la voûte du four. Le moule est caractérisé par le fait que les arêtes sont incorporées au moule, il y a donc une seule pièce correspondante pour chaque élément moulé composant la voûte du four. Ce moule n'est pas représenté sur les figures.

Suivant une possibilité avantageuse de l'invention, la partie 5 a une profondeur variable de sorte à modifier la profondeur du foyer.

On peut par ailleurs réaliser la partie 5 en plusieurs portions assemblables par des systèmes tenons/mortaises ou tout autre moyen. La modularité et l'adaptabilité de l'invention aux souhaits du client sont alors encore accrues.

### REFERENCES

1. Voûte
2. Façade ou autel
3. Orifice
4. Partie arrière de voûte
5. Partie avant de voûte
6. Joint saillant
7. Rainure en creux
8. Joint saillant
9. Sole du four
10. Partie indépendante de la sole
11. Partie indépendante de la sole
12. Jambe
13. Jambe
14. Méplat
15. Méplat
16. Ergot
17. Dallette d'entrée
18. Porte du four

## Revendications

1. Four du type composé d'un foyer fermé, d'une voûte (1), d'une façade ou autel (2) et d'un orifice (3) pour l'évacuation des fumées **caractérisé par le fait que**
la voûte (1) est composée de deux parties, d'une partie arrière (4) et d'une partie avant (5) ; ces deux parties (4, 5) de la voûte (1) s'emboîtent au niveau de leur jonction par un encastrement avec un joint saillant (6) coopérant avec une rainure en creux (7) sur la partie avant (5) de la voûte (1) ; cette partie avant (5) de la voûte (1) s'encastre elle-même avec un joint saillant (8) avec la pièce faisant office de façade ou d'autel (2) ; entre cette façade ou autel (2) et la partie avant (5), il est prévu une réserve en partie haute qui forme l'orifice (3) de l'évacuation des fumées.

2. Four selon la revendication 1 **caractérisé par le fait que**
la sole du four (9) est réalisée en deux parties indépendantes (10, 11) coupées selon l'axe longitudinal AA du four.

3. Four selon la revendication 2 **caractérisé par le fait que**
le joint saillant (8) de la partie avant (5) du four forme deux jambes (12, 13) latérales surmontées de chaque côté d'un méplat (14, 15) de chaque côté d'un ergot (16) de forme carrée qui est prévu jusqu'au sommet de la voûte (1).

4. Moule pour couler les pièces en béton réfractaire du four selon la revendication 1,
ledit moule produit la forme de toutes les pièces principales du four, à savoir la partie arrière (4), la partie avant (5) de la voûte et la façade ou autel (2), ce dit moule produit la forme de toutes ces pièces composant la voûte du four ; le moule est **caractérisé par le fait que** les arêtes sont incorporées au moule, il y a donc une seule pièce correspondante pour chaque élément moulé composant la voûte du four.
